(19) Europäisches Patentamt
European Patent Office
Office européen des brevets

(11) EP 3 974 646 A1

(12) EUROPEAN PATENT APPLICATION

(43) Date of publication:
**30.03.2022 Bulletin 2022/13**

(21) Application number: **20198710.4**

(22) Date of filing: **28.09.2020**

(51) International Patent Classification (IPC):
***F03D 7/04*** *(2006.01)* ***F03D 17/00*** *(2016.01)*

(52) Cooperative Patent Classification (CPC):
**F03D 7/046; F03D 17/00;** F05B 2260/821; F05B 2270/32

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ventus Engineering GmbH**
**1030 Wien (AT)**

(72) Inventors:
- **LÜBKER, Poul Anker Skaarup**
  **6340 Baar (CH)**
- **MINGALIEV, Shavkat**
  **1010 Wien (AT)**
- **TOLRON, Xavier**
  **1150 Wien (AT)**

(74) Representative: **Patrade A/S**
**Ceresbyen 75**
**8000 Aarhus C (DK)**

# (54) METHOD AND SYSTEM FOR WIND SPEED DETERMINATION USING VIBRATION DATA

(57) Disclosed is a method of determining a wind speed experienced by a wind turbine generator. The method may comprise acts as described in the following. There is an act of collecting time series data ($x_i$) of a vibration signal from at least one blade of the wind turbine generator. There is an act of defining a metric point from a metric based on a sum of absolute changes between consecutive time series data ($x_i$ and $x_{i+1}$). There is an act of determining a wind speed experienced by the at least one blade as a function of the metric. Also disclosed is a method of operating a wind turbine. A wind speed detector is further disclosed.

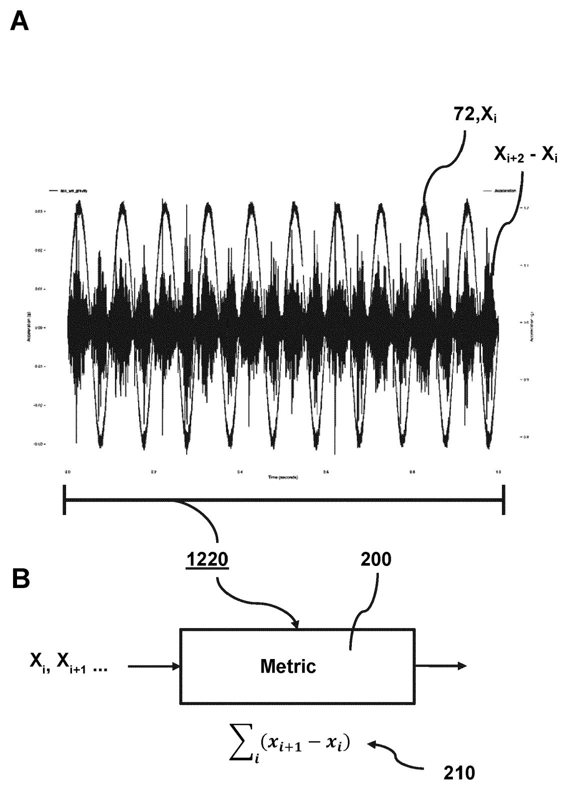


Fig. 3

EP 3 974 646 A1

## Description

## BACKGROUND OF THE INVENTION

### Field of the Invention

The present invention relates to a method of determining a wind speed experienced by a wind turbine generator. The method may comprise acts as described in the following. There is an act of collecting time series data ($x_i$) of a vibration signal from at least one blade of the wind turbine generator. There is an act of defining a metric point from a metric based on a sum of absolute changes between consecutive time series data ($x_i$ and $x_{i+1}$). There is an act of determining a wind speed experienced by the at least one blade as a function of the metric. The present invention also relates to a method of operating a wind turbine. The present invention relates to a wind speed detector.

### Description of Prior Art

The operation of wind turbine generators benefits from information concerning operational conditions. It would be obvious to state that wind characteristics such as wind speed and other wind characteristics are important operational and performance conditions and parameters to a wind turbine.

A plethora of diagnostics exists to assess the operational conditions that a wind turbine generator might experience during operation. Anemometers placed on site or on the nacelle are just examples. Lidar systems placed on site or on the wind turbine constitute other such examples.

There is a need determining the actually experienced wind characteristics such as the wind speed actually experienced by a blade or rotor of a wind turbine generator.

There is also a need to provide alternative methods and systems to provide wind characteristics e.g. wind speed in their own right or to validate, or otherwise contribute to the determination of wind characteristics experience by a wind turbine during operation.

## SUMMARY OF THE INVENTION

It is a purpose to improve information about wind characteristics experienced by a wind turbine. It is a purpose to improve information about wind speed and/or turbulence intensity experienced by a wind turbine.

It is a purpose to use as little instrumentation as possible over the lifetime of a wind turbine generator as well as for alternative measurements or means to determine wind characteristics including wind speed and turbulence intensity.

## Description

An objective is achieved by a method of determining a wind speed experienced by a wind turbine generator. The method may comprise acts as described in the following.

There is an act of collecting time series data ($x_i$) of a vibration signal from at least one blade of the wind turbine generator.

There is an act of defining a metric point from a metric based on a sum of absolute changes between consecutive time series data ($x_i$ and $x_{i+1}$).

There is an act of determining a wind speed experienced by the at least one blade as a function of the metric.

Thereby, providing information about a wind speed experienced by the wind turbine generator, which is central to the wind power production. Such very specific information about the wind speed directly experienced by a specific turbine is essential to determine if a wind turbine generator is producing efficiently and safely, and this information could also be used to optimize the production of a wind turbine generator or a whole wind farm.

An advantage is that vibration signals provide inherent information as actually experienced. Vibration signals may readily be available for this or other purposes. As such the method may reduce or eliminate the use of additional wind speed detection methods or systems. Alternatively, the method may provide additional information to verify or improve accuracy of determining wind speed.

A further advantage is that the vibration data and the methods outlined may be used to determine other wind characteristics such as turbulence intensity.

Vibration signals may be provided by installing vibration sensors as will be described. Alternatively, vibration signals and vibration sensors may readily be available as an installed part of say a Critical Components Condition Monitoring, fault detection and instant Alarm System (CCCMAS).

Such monitoring technology may provide information based on data collected by 3-axis accelerometer sensors located inside the rotor. Three accelerometers may be installed inside of the individual wind turbine blades. Each sensor may be installed identically in each blade. That is, each sensor is placed with the same distance from the centre of rotation, with one sensor-axis aligned along the length of the blade, one sensor-axis aligned with the blade-flapwise axis, and the last sensor-axis aligned with the blade-edgewise axis.

The purpose of these sensors is to provide a way to detect wind speed and turbulence intensity using the hub as a measurement instrument. One sensor in one blade would be a minimum but enough for the following algorithms to work. This is a sensor by sensor approach in the sense that each sensor node may have its own algorithm for wind speed, and wind characteristics such as turbulence intensity detection. Since the data of two sensors are not intended to be compared against each other, this approach may compensate for any error of installation (orientation, distance from the centre...) or difference of measurement from one sensor to another.

As such, vibration signals may be provided. Alternative or equivalent vibration signals may be provided. Vibration signals for the sole purpose of determining wind speed or wind characteristics as will be described may be provided by simpler installations to provide sufficient data which simpler installation may be identified through simple experimentation. Likewise, more accurate data may be provided by installing vibration sensors of higher resolution, higher sensitivity, more precise installation.

In an aspect, the sum of absolute changes between consecutive time series data ($x_i$) may be calculated as:

$$absolute\ sum\ of\ changes\ = \sum_i abs(x_{i+1} - x_i)$$

where $x_i$ and $x_{i+1}$ is consecutive time series data from the vibration signal.

This metric has shown to contain the information content required to establish a one to one relationship with wind speed characteristics. The metric or transformation is also simple to process and extracts information from a vibration signal sampled usually at a higher sampling rate than the wind speed sampling rate. As such, the transformation in an information preserving way generates a metric point - absolute sum of changes - over a period of sampled vibration signals. A further advantage is that the transformation is particularly simple, does not require a memory, but can be generated as vibration signal samples are generated as a time series of consecutive samples e.g. $x_i$.

For wind speed determination a person skilled in the art will appreciate that wind speed is distributed as a wind speed distribution. Such distribution may be a continuum, but often a histogram of the number of occurrences of a wind speed, hence binned over a period of time. In example, a wind speed distribution may be represented by having the wind speed binned for every 1 m/s on the x-axis, and on the y-axis, the number of times this is binned, wind speed happens. Such wind speed distribution may be established empirically. Alternatively, the wind speed distribution may be approximated or fitted to a mathematical curve. The shape of a wind speed distribution follows a Weibull distribution.

An example of generating the wind speed or metric distribution may be as follows. The quantile of data are the values of data that divide the whole data into intervals. For example: quantile 0.1 is the value of the data where 10% of the whole data are below that number and 90% are above. For example: quantile 0.7: is the value of the data point where 70% of the whole data are below that number and 30% are above.

A further aspect of preparing data may be that vibration data is provided from multiple axes sensors such as a 3D accelerometer. Such accelerometer may provide data in respective channels where e.g. $acc_{ch2}$ is the acceleration data from the second channel of the 3D accelerometer. Channel data may be provided directly or as a single measure or metric such as the length of the acceleration defined as the geometric length:

$$acc_{length} = \sqrt{acc_{ch1}{}^2 + acc_{ch2}{}^2 + acc_{ch3}{}^2}.$$

As an example, vibration signals from a rotating blade will have a vibration bias from the rotational period as the blade rotates. The outlined changes between consecutive points eliminate or cancel this overall rotation. Using the length of accelerations, the "pure" vibrations allow the transformation into a suitable metric and thus generate a corresponding metric distribution.

The "pure" vibration may be transformed into one metric or statistical number as the sum of absolute changes. This single value contains the information of the "intensity" of the pure vibration and the metric point may be calculated as:

$$sum\ of\ absolute\ changes\ = \textstyle\sum_i abs(acc_{length\, i+1} - acc_{length\, i}).$$

With the absolute sum of changes, the metric is used for wind speed detection and the value correlates to the wind speed by 90 % since the higher the wind speed, the higher the vibrations.

In principle, any channel data or combination of channel data can be used for this calculation of absolute sum of changes.

In an aspect, the wind speed may be determined by collecting a period of time series data and transforming the collected time series data to a metric data point. The wind speed may be determined by interpolating the metric data point to a predetermined wind speed and metric distribution.

In an aspect, the predetermined wind speed and metric distribution may be binned for the specific wind turbine blade and corresponding vibration sensor.

The function of this method is to use the fact that pure vibrations are correlated to wind speed by 90% and a priori knowledge of the wind speed distribution experienced on the site. The method allows building a distribution using one metric of sensor data based on the wind speed distribution experienced by the wind turbine generator.

The model is built as a sensor per sensor approach. That is, each sensor will have a corresponding transformation or metric distribution independent of others.

A person skilled in the art will appreciate that in order to detect or determine which wind speed the turbine is currently experiencing, then: a period of e.g. one minute of vibration data must be recorded. This data must be transformed into the metric data point e.g. using the sum of absolute changes. The metric distribution corresponding to the specific sensor as outlined above must be found. The closest bin to the newly calculated metric point must be found and associated to the corresponding wind speed distribution. A specific example is illustrated in figure 8.

The advantages of this method are that one accelerometer in one blade associated with the historical wind speed distribution of the wind turbine generator or farm is enough to predict wind speed so no other instruments are needed. A further advantage is that the method constantly improves as new data points, e.g. one new metric data from one minute, are generated and in order to fit as much as possible the historical wind speed distribution. A further advantage is that there is no over fitting. The method is easy and fast. In example, two years of metrics, i.e. data points of one minute, takes less than a minute to be transformed into the metric distribution.

It is further appreciated that groups are always divided with the same percentage using this method which means that it is only a matter of time. This means that the data actually represents the wind speed distribution, before the model reaches the required accuracy. Thus, this method converges to a true wind speed experienced.

In an aspect, the methods described above may further comprise acts as described in the following.

There is an act of training a machine learning (ML) model with metric points of labeled time series data and building a supervised machine learning model (SML).

There is an act of verifying the supervised machine learning model (SML) by inputting a metric data point of labelled time series data to the supervised machine learning model (SML) and outputting a calculated data label and comparing the output with known wind characteristic data label i.e. a known wind speed label.

There is an act of determining, which may be performed by inputting the metric point to the supervised machine learning model (SML) and outputting the wind characteristic data from the supervised machine learning model (SML).

Labelling of data may generally be understood by a person skilled in the art. In the sense of the above described supervised machine learning labelling may be performed as here described. As will be outlined, then for the supervised machine learning labelled data is needed. Labelled data is data where the output value of the data is already known in advance, e.g. wind speed or turbulence intensity from a LiDAR for example, in order to train and test the system.

For a period time e.g. each minute of vibration data, this data is transformed into metrics (one or several metrics) which metrics may be associated to the real output value (wind speed or turbulence intensity) for this particular period of time e.g. a minute. A person skilled in the art will appreciate that the period may be changed according to the quality or requirement of precision or computational resources.

The result is labelled data points i.e. metric(s) and corresponding wind characteristic e.g. wind speed or turbulence intensity ready to train and test the supervised machine learning algorithm.

The newly created associated values, i.e. metrics and label, may be injected into the system that will train itself to associate the metrics with the labels.

The described method of using a supervised machine learning algorithm may be realized using sensor data and LiDAR data to label the vibration data from the sensor. The input is the pure vibrational data extracted from the sensor: the sum of the absolute value is the difference of consecutive values over a period of time, in order to remove any influence from the rotational speed or turbine behavior dictated by any measurements instruments.

The supervised machine learning has the advantage that it is very accurate and stable.

The method of determining wind speed and e.g. turbulence intensity may be performed by the supervised machine learning algorithm using sensor data and LiDAR labels. The input data are pure vibrations, e.g. the absolute sum of absolute changes from vibration sensors and the wind speed or turbulence intensity may be from a nacelle-based LiDAR.

For a specific sensor the supervised machine learning model will train itself, i.e. "write its own algorithm", on data having a label. To verify the quality of the algorithm, data where the outcome value is known is used to test the labelled data against the model and compare the outcome tested to the known label.

In an aspect, the acts of training and verifying are performed on n-multiple vibration signals obtained by corresponding n-multiple vibration sensors. The act of training is performed based on n-multiple labels ($Y_{1..n}$), whereas the act of verifying is performed based on a predetermined average measure of the n-multiple labels ($Y_{1..n}$).

Thus, having multiple sensors used individually, the results of the outcome may be combined to find the best possible value.

In an aspect, the methods described above may comprise acts as described in the following. This may be referred to as unsupervised machine learning (USML). As for labelling, the previously outlined principles apply.

There is an act of training a machine learning (ML) model with metric points of unlabeled data points and building an unsupervised machine learning model (USML).

There is an act of grouping metric data points using a K-mean algorithm to a number of metric groups.

There is an act of associating the formed metrics groups with wind characteristic distribution, the specific wind turbine blade and corresponding vibration sensor.

There is an act of verifying the unsupervised machine learning model (USML) by inputting a metric point to the unsupervised machine learning model (USML) and outputting the wind characteristic data from the unsupervised machine learning model (SML).

The act of determining may be performed by inputting the metric point to the unsupervised machine learning model (USML) and outputting the wind characteristic data from the unsupervised machine learning model (USML).

This method is an unsupervised machine learning method using sensor data and the knowledge of the wind speed distribution experienced by the wind turbine generator is used. The input extracted from the sensor may be the same pure vibrational data as in the supervised machine learning method previously described. The unsupervised machine learning algorithm will classify these vibrations into a predetermined number of groups. The algorithm will then pair the groups by size, with either the wind speed distribution.

The advantage of this unsupervised machine learning method is that it only uses sensor data and the knowledge of the wind speed distribution.

For a single sensor a corresponding unsupervised machine learning model may be constructed as follows. A K-Mean algorithm may be readily installed and given a predefined number of groups. The algorithm will automatically divide the metrics data points that are the closest to each other into this number of groups. The final data groups have significantly different sizes, and this is used to associate each data group with a wind speed bin of the corresponding size. To verify the quality of the algorithm, data points with a known outcome value are used to test the labelled data against the model and compare the outcome tested to the known label.

In an aspect, the acts of training and verifying are performed on n-multiple vibration signals obtained by corresponding n-multiple vibration sensors. The act of training may be performed based on n-multiple labels ($Y_{1..n}$), whereas the act of verifying may be performed based on a predetermined average measure of the n-multiple labels ($Y_{1..n}$).

Thus, having multiple sensors used individually, the results of the outcome may be combined to find the best possible value.

In an aspect, a there may be a method of operating a wind turbine generator as a function of the wind speed as previously outlined.

Having a wind speed determined as outlined or a wind characteristic such as turbulence intensity allows for improved operation of the wind turbine experiencing the wind speed or wind characteristics.

An objective is achieved by a wind speed detector and/or turbulence intensity detector comprising at least one vibration sensor configured to be installed in a wind turbine blade. The means to perform the acts may be any one or more of the previously outlined methods.

In an aspect, the detector, wherein the vibration sensor is an accelerometer arranged in a sensor node may further comprise a computational unit configured to collect vibration data and to perform the calculation of sum of absolute changes.

The accelerometer may be a 3-D axis accelerometer co

In an aspect, the detector may comprise multiple vibration sensors, each configured to independently determine the wind characteristics. The detector may be further configured to determine the wind characteristic as a function of multiple independent determined wind characteristics.

In an aspect, a wind turbine generator may comprise a wind characteristic detector wherein the least one vibration sensor is in at least one blade.

In an aspect, there may be a computer program product comprising instructions to cause the detector as described. The program may also execute the acts as disclosed. A computer-readable medium may have stored the computer program as previously outlined.

## BRIEF DESCRIPTION OF DRAWINGS

Embodiments of the invention will be described in the figures, whereon:

- Fig. 1 illustrates a generic wind turbine generator with vibration sensors experiencing wind characteristics e.g. wind speed conditions;
- Fig. 2 illustrates a method of determining a wind speed experienced by a wind turbine generator;
- Fig. 3 illustrates a time series of a period of vibration data and changes between consecutive data points;
- Fig. 4 illustrates supervised machine learning model of a single sensor and for multiple sensors;
- Fig. 5 illustrates a confusion matrix for the supervised machine learning model;
- Fig. 6 illustrates un-supervised machine learning model of a single sensor and for multiple sensors;
- Fig. 7 illustrates a confusion matrix for the un-supervised machine learning model;
- Fig. 8 illustrates a wind speed distribution and an interpolation of binned metric data based on said wind speed distribution
- Fig. 9 illustrates a confusion matrix for the result by interpolation of binned metric data;

| **Item** | # |
|---|---|
| Wind turbine generator | WTG, 30 |
| | |
| | |
| Wind turbine tower | 46 |
| Nacelle | 48 |
| Rotor blade | 50 |
| Rotor | 51 |
| Set of blade sensors | 60 |
| | |
| Blade sensor | 62 |
| Sensor node | 65 |
| Node Power | 66 |
| Vibration sensor | 70 |
| Vibration signal | 72 |
| | |
| Time series data | 80 |
| Labelled Time series data/Labelled data | 85 |
| Unlabelled Time series data/Unlabelled data | 86 |
| | |
| Wind speed detector | 90 |
| Computational unit | 92 |
| | |
| Wind characteristic | 100 |
| Wind speed/wind speed data | 110 |
| Labelled wind speed/wind speed data label | 111 |
| Wind speed distribution | 112 |
| Wind speed determined | 115 |

(continued)

| Item | # |
|---|---|
| Wind Turbulence intensity | 120 |
| | |
| | |
| Metric | 200 |
| Metric distribution | 202 |
| Sum of absolute changes | 210 |
| Sum of absolute changes metric distribution | 212 |
| Metric data point/metric point | 280 |
| | |
| Method of determining | 1000 |
| Collecting | 1100 |
| Defining | 1200 |
| Transforming | 1220 |
| Determining | 1300 |
| Interpolating | 1320 |
| Machine learning | 2000 |
| Supervised machine learning | 2010 |
| Supervised machine learning model (SML) | 2015 |
| Un-supervised machine learning | 2020 |
| Un-supervised machine learning model (USML) | 2025 |
| Training | 2100 |
| Grouping | 2110 |
| Associating | 2120 |
| | |
| | |
| Verifying | 2200 |
| Comparing | 2220 |
| | |
| Operating | 3000 |

## DETAILED DESCRIPTION OF THE INVENTION

Figure 1 illustrates a wind turbine generator (WTG) 30 comprising a tower 46 supporting a nacelle 48 with blades 50 rotatable connected and forming a rotor 51. The wind turbine generator 30 is here shown with a set of blade sensors 60 where each blade has a blade sensor 62 that in this case may be vibration sensor 70 providing a vibration signal 72 as a time series 80 (time series data 80). A specific blade 50A has a specific vibration sensor 72A that generates specific vibration signals 72A as a specific time series 80A.

The wind turbine generator 30 is experiencing wind conditions with wind characteristics 100 such as wind speed 110 characterised by wind speed distribution 115.

Figure 2 illustrates a method of determining 1000 a wind speed 110 experienced by a wind turbine generator 30.

In example only and with reference to figure 1 the following acts are described.

There is an act of collecting 1100 time series data ($x_i$) of a vibration signal 72 from at least one blade 50 of the wind turbine generator 30.

With reference to figure 3, also, there is an act of defining 1200 a metric point 210 from a metric 200 based on a sum of absolute changes 210 between consecutive time series data ($x_i$ and $x_{i+1}$).

With reference to the remaining figures there is an act of determining 1300 a wind speed 110 experienced by the at least one blade 50 as a function of the metric 200.

There may be further acts or support acts as illustrated with an act of transforming 1220 as part of the act of defining 1200 the metric. The act of transforming 1220 will be described. There may an act of interpolating 1320 which may be used in one or more embodiments and as described.

Figure 3A illustrates a time series of a period of vibration time series data 80 $x_i$ from a vibration signal 72 obtained from an accelerometer on a blade 50 of a wind turbine generator. Also shown is the change between consecutive data points $x_i$ and $x_{i+1}$ being consecutive time series data from the vibration signal 72.

Figure 3B illustrates a metric 200 applied to time series $x_i$. The metric 200 may be a specific metric being the sum of absolute changes 210 between consecutive time series data ($x_i$). The specific metric being the sum of absolute changes 210 is calculated as:

$$sum\ of\ absolute\ changes\ = \sum_i abs(x_{i+1} - x_i)$$

where $x_i$ and $x_{i+1}$ is consecutive time series data from the vibration signal 72.

In this case the vibration sensor is a 3-D accelerometer with axes arranged with respect to the blade: A: axis along the blade, B: edgewise axis, F: flap wise axis so that a vibration signal 72 is generated as the geometric length as:

$$x_i = acceleration\ length = \sqrt{(\mathrm{A}^2 + \mathrm{B}^2 + \mathrm{F}^2)}$$

By generating the length (of acceleration and thus vibration) by transforming 1220 the data helps to minimize or eliminated the difference in orientation of the sensors during their respective blade installations.

Fig. 4 illustrates supervised machine learning 2000 model of a single vibration signal 72 from a single vibration sensor 70 and for vibration signals 72 form multiple vibration sensors 70.

Figure 4A illustrates machine learning 2000 as a supervised machine learning 2010.

There is an act of training 2100 a supervised machine learning model (SML) 2015 with metric points 280 of labeled time series data 85 and building the supervised machine learning model (SML) 2015.

Actual training 2100 is based on sum of absolute changes 210 with data that are labelled 85.

The training 2100 may associated data metrics with respect to wind speed. The training 2100 may associate data metrics with respect to turbulence intensity. Training results in a supervised machine learning model (SML) 2015.

There one or more acts of verifying 2200 the supervised machine learning model (SML) 2015 by inputting a metric data point 280 of labelled time series data 85 to the supervised machine learning model (SML) and outputting a calculated data label and comparing 2220 the output with known wind speed data label 111.

The act of determining 1300 (not shown) may be the upper path of the verification is performed by inputting the metric point 280 to the supervised machine learning model (SML) 2015 and outputting the wind speed data 110 from the supervised machine learning model (SML) 2015.

The supervised machine learning model 2015 will train itself ("write its own algorithm") on data with a label 85. As is apparent and to verify the quality of the algorithm or model, data where the outcome result is know is used to test the labelled data 85 against the model 2015 to compare the outcome to the known label.

Figure 4B illustrates the supervised machine learning model 2015 as outlined where the acts of training 2100 is performed on respective n-vibration signals $72_{i,...,n}$. (Not shown) generating respective 2015 supervised machine learning models $2015_{i,\ ...,\ n}$.

The acts of verifying $2200_{i,...n}$ is performed on respective n-multiple vibration signals $72_1$, ...,$72_n$ obtained by corresponding n-multiple vibration sensors $70_1$,... $70_n$. The act of training 2100 is performed based on n-multiple labels ($Y_{1..n}$).

The act of verifying 2200 comprises an is performed based on a predetermined average measure of the n-multiple labels ($Y_{1..n}$) and finally by comparing 2220 the average with labeled 210, 85 data. The averaging may be a mean-average or similar average measures.

In this scenario several sensors are used individually and the results of the outcome are combined to find the best possible value.

Fig. 5 illustrates a confusion matrix for the supervised machine learning model 2015. Validation of this method is done with or seen from the confusion matrix which must be as diagonal as possible, which is observed in this case.

Figure 5A represents a confusion matrix based on data as outlined in connection with the description of figure 4. The x-axis in this case represents the detected wind speed 115 value using the supervised machine learning method 2010. Hence vibration signals 72 are transformed to the metric, where each point is one minute of data transformed into the metric, which here is the sum of absolute changes.

The metric point is inputted to the supervised machine learning model 2015 outputting the detected wind speed 115 along the x-axis and plotted aligning with an otherwise measured wind speed 110. In this case the y-axis represents the actual wind speed as measured by a nacelle based LiDAR system.

In figure 5B the x-axis represents the detected turbulence intensity (TI) value using the disclosed supervised machine learning method 2010.

Rather than labelling wind speed measures, the metric 200, i.e. the sum of absolute changes 210, is associated with turbulence intensity during training.

The result of inputting metric points into the turbulence intensity trained supervised machine learning model 2015 and outputting a determined turbulence intensity is seen in this confusion matrix where each metric point is based on the sum of absolute changes of one minute of raw vibration data.
The determined turbulence intensity is plotted against the LiDAR measured turbulence intensity on the y-axis.

Validation is observed since the confusion matrix is a diagonal.

Fig. 6 illustrates a machine learning 2000 implementation of the method as an unsupervised machine learning 2020 resulting in an un-supervised machine learning model 2025 based on vibration signals 72. Figure 6 A illustrates model generation from a single vibration sensor 72 and figure 6B for multiple vibration sensors 72.

Figure 6A illustrates the act of training (2100) using an unsupervised machine learning (USML) 2020 with metric points 280 of unlabeled data points (86) and building an unsupervised machine learning model (USML) 2025.

The building of the model is based on grouping 2110 metric data points 280 using a K-mean algorithm to a number of metric groups. There is an act of associating 2120 the formed metric groups with a wind speed distribution 112 based on vibrations of specific wind turbine blade 50 and corresponding vibration sensor 70.

There is an act of verifying 2200 the unsupervised machine learning model (USML) 20-. Verification is performed by inputting a metric point 280 to the unsupervised machine learning model (USML) 2025 and outputting the wind speed data 110 from the unsupervised machine learning model (USML) 2025.

The act of determining 1300 (not shown) may be the upper path of the verification is performed by inputting the metric point 280 to the unsupervised machine learning model (USML) 2025 and outputting the wind speed data 110 from the unsupervised machine learning model (USML) 2025.

Figure 6B illustrates in continuation of the unsupervised machine learning model 2025 in figure 6A outlined where the acts of training 2100 is performed on respective n-vibration signals $72_{i,...,n}$. (Not shown) generating respective unsupervised machine learning models $2025_{i,\ ...,\ n}$. The act of training 2100 is performed based on n-multiple labels ($Y_{1..n}$).

The acts of verifying 2200 are performed on n-multiple vibration signals 72 obtained by corresponding n-multiple vibration sensors 70.

The act of verifying 2200 is performed based on a predetermined average measure of the n-multiple labels ($Y_{1..n}$). The average may be a median.

In summary each vibration sensor 70 has a respective unsupervised machine learning model 2025 associated. The model is based on a K-Mean algorithm. The K-Mean algorithm is given a predefined number of groups and will automatically divide the metric data points, i.e. vibration data transformed into one single metric which is here the sum of absolute changes that are the closest to each other into this number of groups.

The final data groups have significantly different sizes which are used to associate each data group with the wind speed bin of the wind speed distribution 112 and of the corresponding size.

Figure 7 illustrates a confusion matrix for the unsupervised machine learning model 2025. The quality of the algorithm is verified as before with LiDAR measurement.

The x-axis represents the detected Wind Speed value using this Unsupervised Machine learning model 2025 against the y-axis with wind speed LiDAR measured independently. Each point is one minute of data transformed into the metric, which here is the sum of absolute changes.

Figure 8 illustrates a wind speed distribution 202 and an interpolation of binned metric 200 data based on said wind speed distribution 202.

The wind speed determined 115, 110 is by collecting 1100 a period of time series data 80 and transforming 1220 the collected time series data 80 to a metric data point 280.

The act of determining 1300 the wind speed 110,115 is by interpolating 1320 the metric data point 280 to a predetermined wind speed 110 and metric distribution 202.

In this case the predetermined wind speed 110 and metric distribution 202 is binned for the specific wind turbine blade 50 and a corresponding specific vibration sensor 70.

Hence, figure 8A represents the number of time a wind speed occurs over a period of time. The wind speeds are binned per 1 m/s. Above each bin there is a top (blue) number that is the number of occurrences of this wind speed bin. Below that (blue) number there is is the averaged value of pure vibration i.e. the sum of absolute changes as measured for this wind speed bin. Thus the working assumption made is that it is possible to build a similar distribution for pure vibrations and match this to the wind speed distribution 112. That is assuming a 90 % correlation between the raw data of both wind speed 110 and the metric 200 here the sum of absolute changes 210 of pure vibrations. It is seen how the metric 200 increases as the value of the wind speed bin increases.

In example the association between the wind speed distribution 112 and the metric distribution 202 i.e. the sum of absolute changes 212 is performed as follows.

Wind speeds of 0.0 - 0.5 m/s happens 0.1% of the time. Find quantiles of the data for 0.0% and 0.1%. The mean value between these quantiles is 14. This value will be associated with the 0 m/s bin.

Wind speeds of 0.5 - 1.5 m/s happens 1.2% of the time. Find quantiles of the data for 0.1% and 1.3%. The mean value between these quantiles is 24. This value will be associated with the 1 m/s bin.

Wind speeds of 1.5 - 2.5 m/s happens 3.9% of the time. Find quantiles of the data for 1.3% and 5.2%. The mean value between these quantiles is 47. This value will be associated with the 2 m/s bin.

This procedure is performed until the whole wind speed distribution 112 is converted to a metric distribution 112 based on transforming vibration data.

Figure 8B displays an example of the metric distribution 202 as the sum of absolute changes distribution 212. The wind speed distribution 112 is actually the horizontal wind speed 110. A specific vibration sensor 70 has its own vibration distribution i.e. metric distribution 202 built this way. In order to detect or determined what wind speed 115 the wind turbine is currently experiencing the following is performed.

One minute of data is recorded. Calculation of the acceleration length its length is performed. That is for a 3D-accelerometer with three channels the acceleration is compressed into one channel. This length data is transformed into the metric data point 280 as the sum of absolute changes 210. The specific metric distribution 202 corresponding to this specific sensor 70 is found or used to find the closest bin to the new calculated metric point 280 (left column). Hereafter there is an act of associating the corresponding wind speed distribution 112 (right column). Here interpolation may be used.

Figure 9 illustrates a confusion matrix for the result by interpolation of binned metric data using the method 1000 of interpolating 1320 the metric distribution 202 described in figure 8.

Figure 9 A illustrates a confusion matrix with predicted or determined wind speed 115 against measured or true wind speed data 110. The confusion matrix is for metric distribution 202 established based on 0.5 m/s bins based on data from 15 months of data.

That is for building the metric distribution 202. Predicted or determined wind speed data 115 is for 6 other months of data as tested.

Figure 9 B illustrates a confusion matrix with predicted or determined wind speed 115 against measured or true wind speed data 110 from another and different wind turbine generator. The confusion matrix is for metric distribution 202 established based on 0.5 m/s bins based on data from one month of data. Predicted or determined wind speed data 115 is for another one months of data as tested.

## Claims

1. A method of determining (1000) a wind speed (110) experienced by a wind turbine generator (30), the method (1000) comprising acts of:

   - collecting (1100) time series data ($x_i$) of a vibration signal (72) from at least one blade (50) of the wind turbine generator (30);
   - defining (1200) a metric point (210) from a metric (200) based on an sum of absolute changes (210) between consecutive time series data ($x_i$ and $x_{i+1}$);
   - determining (1300) a wind speed (110) experienced by the at least one blade (50) as a function of the metric (200).

2. The method (1000) according to claim 1, wherein the sum of absolute changes (210) between consecutive time series data ($x_i$) is calculated as:

$$absolute\ sum\ of\ changes = \sum_i abs(x_{i+1} - x_i)$$

where $x_i$ and $x_{i+1}$ is consecutive time series data from the vibration signal (72).

**3.** The method (1000) according to claim 1 or 2, wherein the wind speed (110) is determined by collecting (1100) a period of time series data (80) and transforming (1220) the collected time series data (80) to a metric data point (280); and determining (1300) the wind speed (110) by interpolating (1320) the metric data point (280) to a predetermined wind speed (110) and metric distribution (202).

**4.** The method (1000) according to claim 3, wherein the predetermined wind speed (110) and metric distribution (202) is binned for the specific wind turbine blade (50) and corresponding vibration sensor (70).

**5.** The method (1000) according to claim 1 or 2, further comprising an act of

- training (2100) a machine learning (ML, 2000) model with metric points (280) of labeled time series data (85) and building a supervised machine learning model (SML);
- verifying (2200) the supervised machine learning model (SML) by inputting a metric data point (280) of labelled time series data (85) to the supervised machine learning model (SML) and outputting a calculated data label () and comparing (2220) the output with known wind speed data label (111);

and, wherein the act of determining (1300) is performed by inputting the metric point (280) to the supervised machine learning model (SML) and outputting the wind speed data (110) from the supervised machine learning model (SML).

**6.** The method (1000) according to claim 5, wherein the acts of training (2100) and verifying (2200) are performed on n-multiple vibration signals ($72_1$, ..., $72_n$) obtained by corresponding n-multiple vibration sensors ($70_1$,...$70_n$), the act of training (2100) is performed based on n-multiple labels ($Y_{1..n}$); wherein the act of verifying (2200) is performed based on a predetermined average measure of the n-multiple labels ($Y_{1..n}$).

**7.** The method (1000) according to claim 1 or 2, further comprising an act of

- training (2100) a machine learning (ML) model with metric points (280) of unlabeled data points (86) and building an un-supervised machine learning model (USML) by:

  - grouping (2110) metric data points (280) using a K-mean algorithm to a number of metric groups;
  - associating (2120) the formed metric groups with wind speed distribution (112), the specific wind turbine blade (50) and corresponding vibration sensor (70);

- verifying (2200) the un-supervised machine learning model (USML) by;

  - inputting a metric point (280) to the un-supervised machine learning model (USML) and outputting the wind speed data (110) from the un-supervised machine learning model (SML);

and, wherein the act of determining (1300) is performed by inputting the metric point (280) to the un-supervised machine learning model (USML) and outputting the wind speed data (110) from the un-supervised machine learning model (USML).

**8.** The method (1000) according to claim 7, wherein the acts of training (2100) and verifying (2200) are performed on n-multiple vibration signals (72) obtained by corresponding n-multiple vibration sensors (70), the act of training (2100) is performed based on n-multiple labels ($Y_{1..n}$); and
, wherein the act of verifying (2200) is performed based on a predetermined average measure of the n-multiple labels ($Y_{1..n}$).

**9.** A method of operating (3000) a wind turbine generator (30) as a function of the wind speed (110) determined by the method (1000) of any one or more of claims 1 to 8.

**10.** Wind speed detector (90) comprising at least one vibration sensor (70) configured to be installed in a wind turbine blade (50); means to perform the acts of any one or more of claims 1 to 9.

**11.** The detector (90) according to claim 10, wherein the vibration sensor (70) is an accelerometer arranged in a sensor node (65) further comprising a computational unit (92) configured to collect vibration data and to perform the calculation of the sum of absolute changes (210).

**12.** The detector (90) according to claim 10 or 11, comprising multiple vibration sensors (70), each configured to independently determine the wind speed (110), the detector (90) further configured to determine the wind speed (110) as a function of multiple independent determined wind speed (115).

**13.** A wind turbine generator (30) comprising the wind speed detector (90), according to any one or more of claims 10 to 12, and wherein the least one vibration sensor (70) is in at least one blade (50).

**14.** A computer program product comprising instructions to cause the detector, according to any one or more of claims 10 to 12, to execute the acts of any one or more of claims 1 to 9.

**15.** A computer-readable medium having stored thereon the computer program of claim 14.

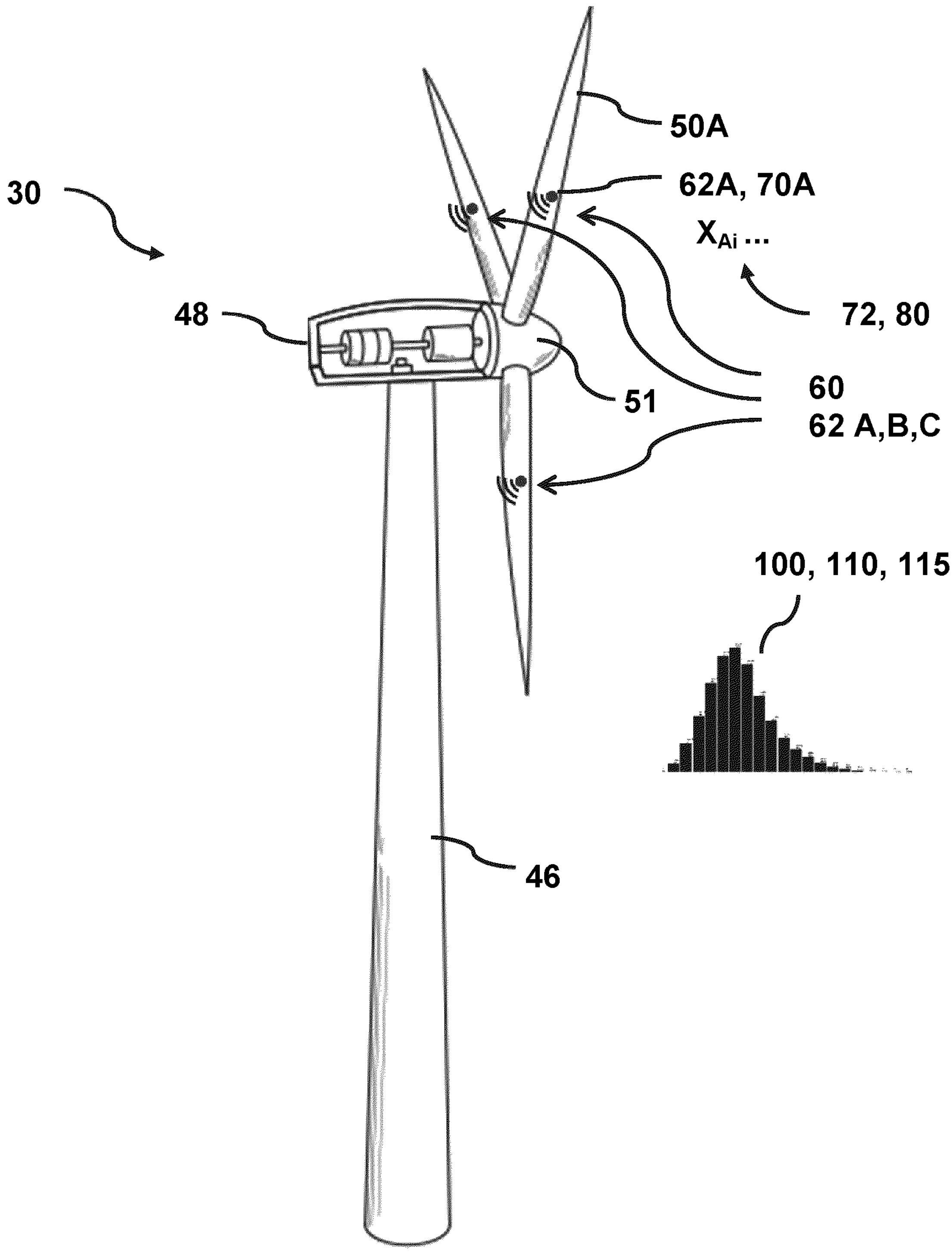


Fig. 1

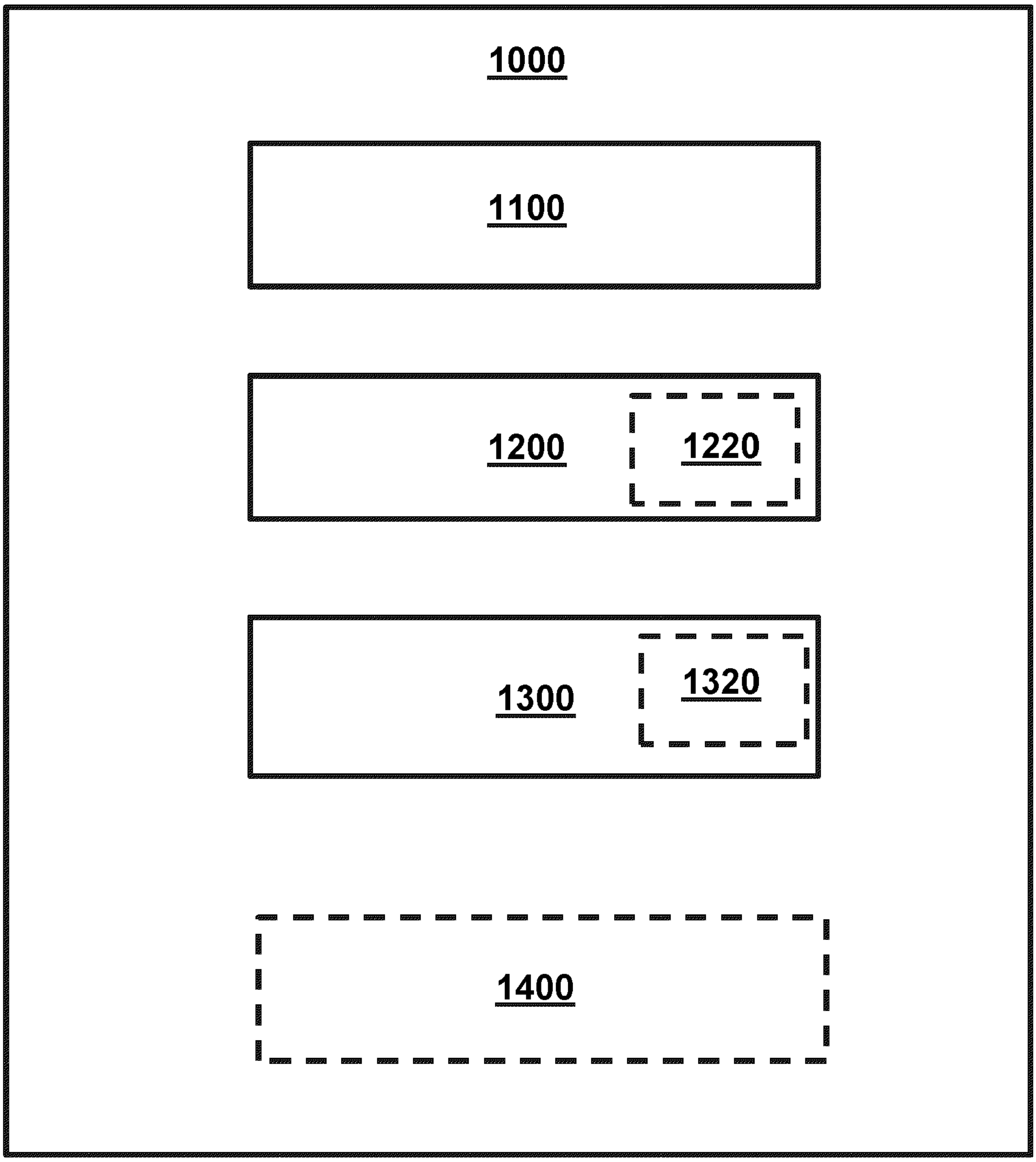


Fig. 2

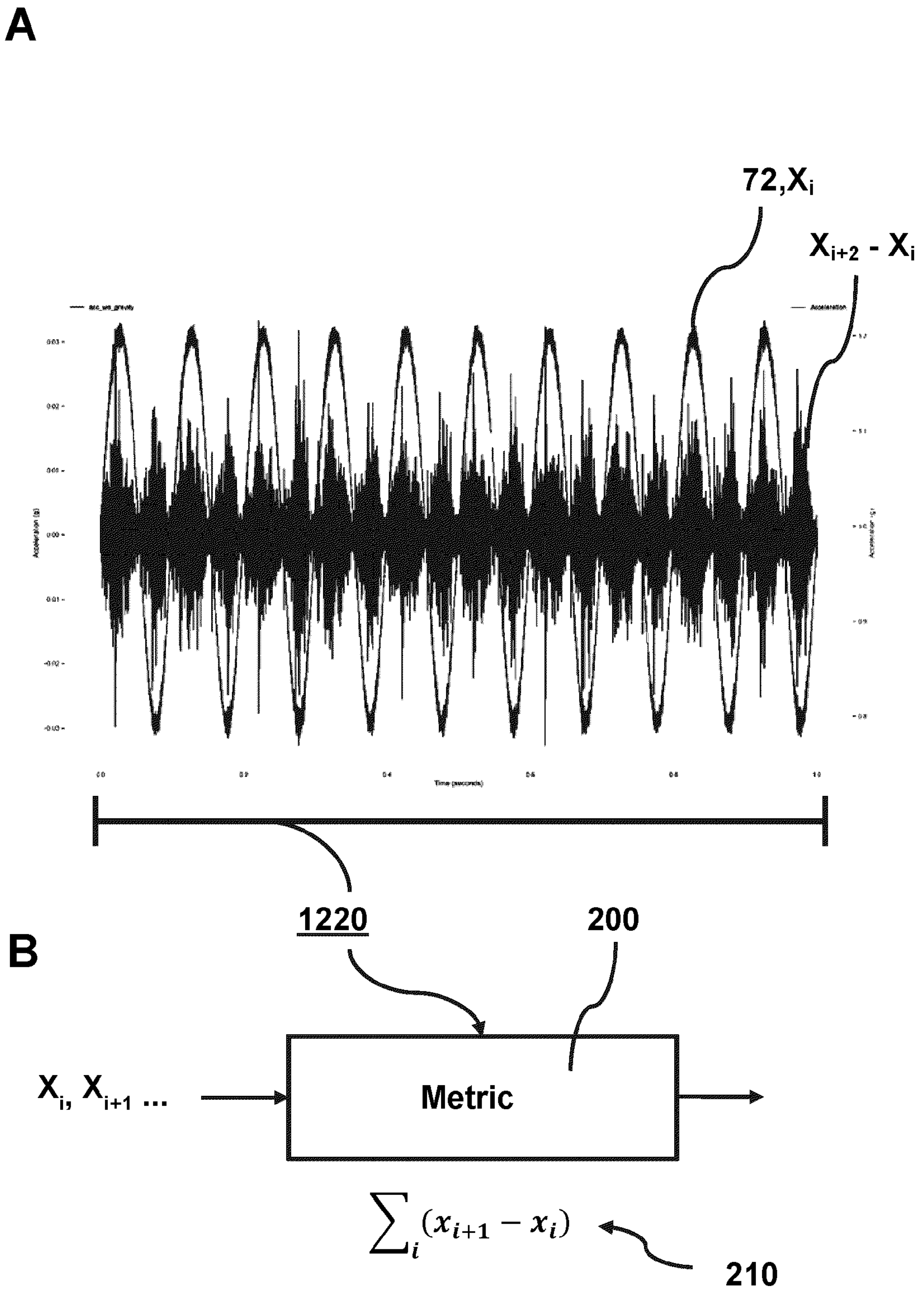


Fig. 3

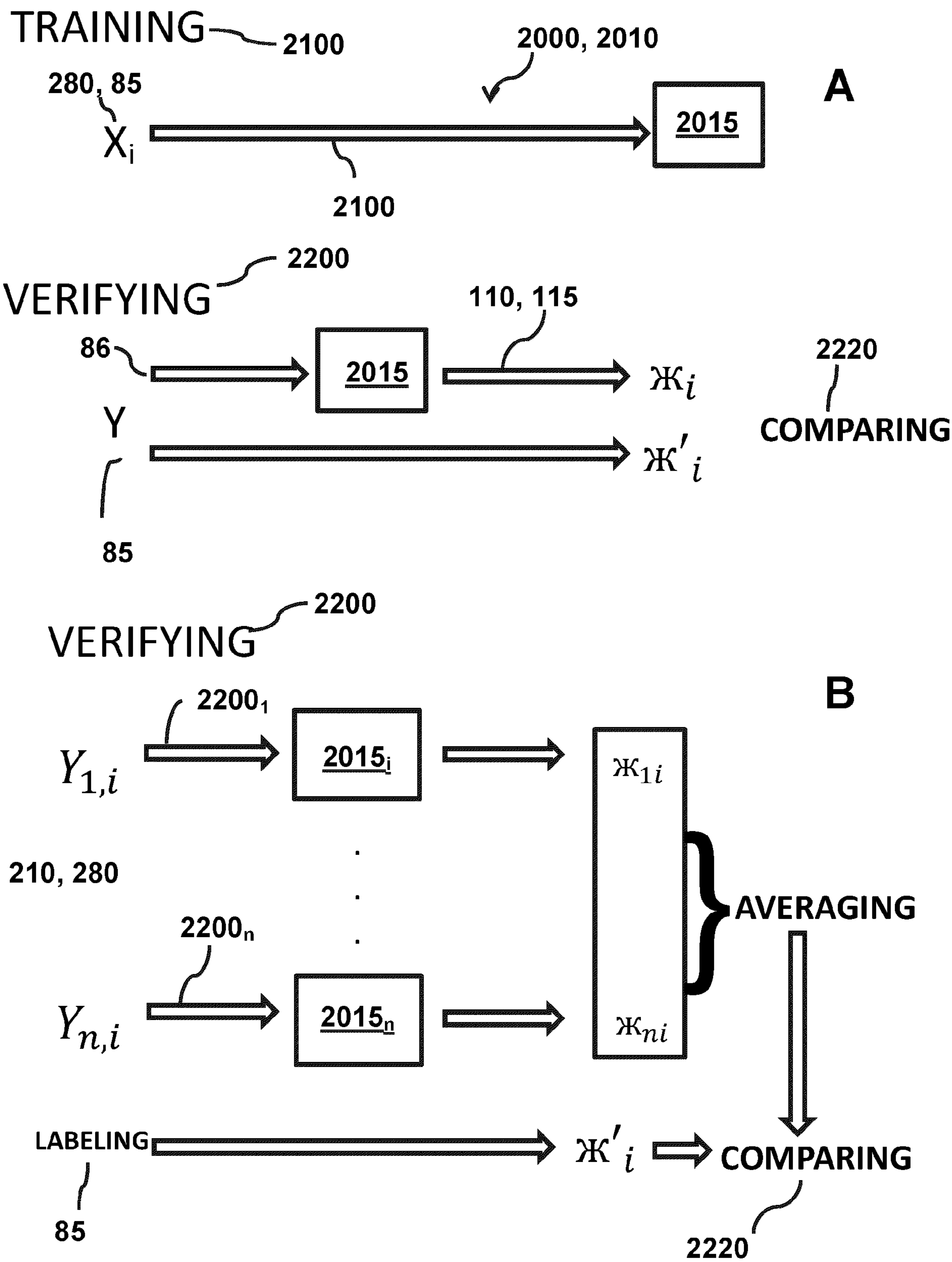
TRAINING
2100
2000, 2010
A
280, 85
$X_i$
2015
2100
2200
VERIFYING
110, 115
86
2015
Ж$_i$
2220
COMPARING
Y
Ж'$_i$
85
2200
VERIFYING
B
$2200_1$
$Y_{1,i}$
$2015_i$
Ж$_{1i}$
210, 280
AVERAGING
$2200_n$
$Y_{n,i}$
$2015_n$
Ж$_{ni}$
LABELING
Ж'$_i$
COMPARING
85
2220

Fig. 4

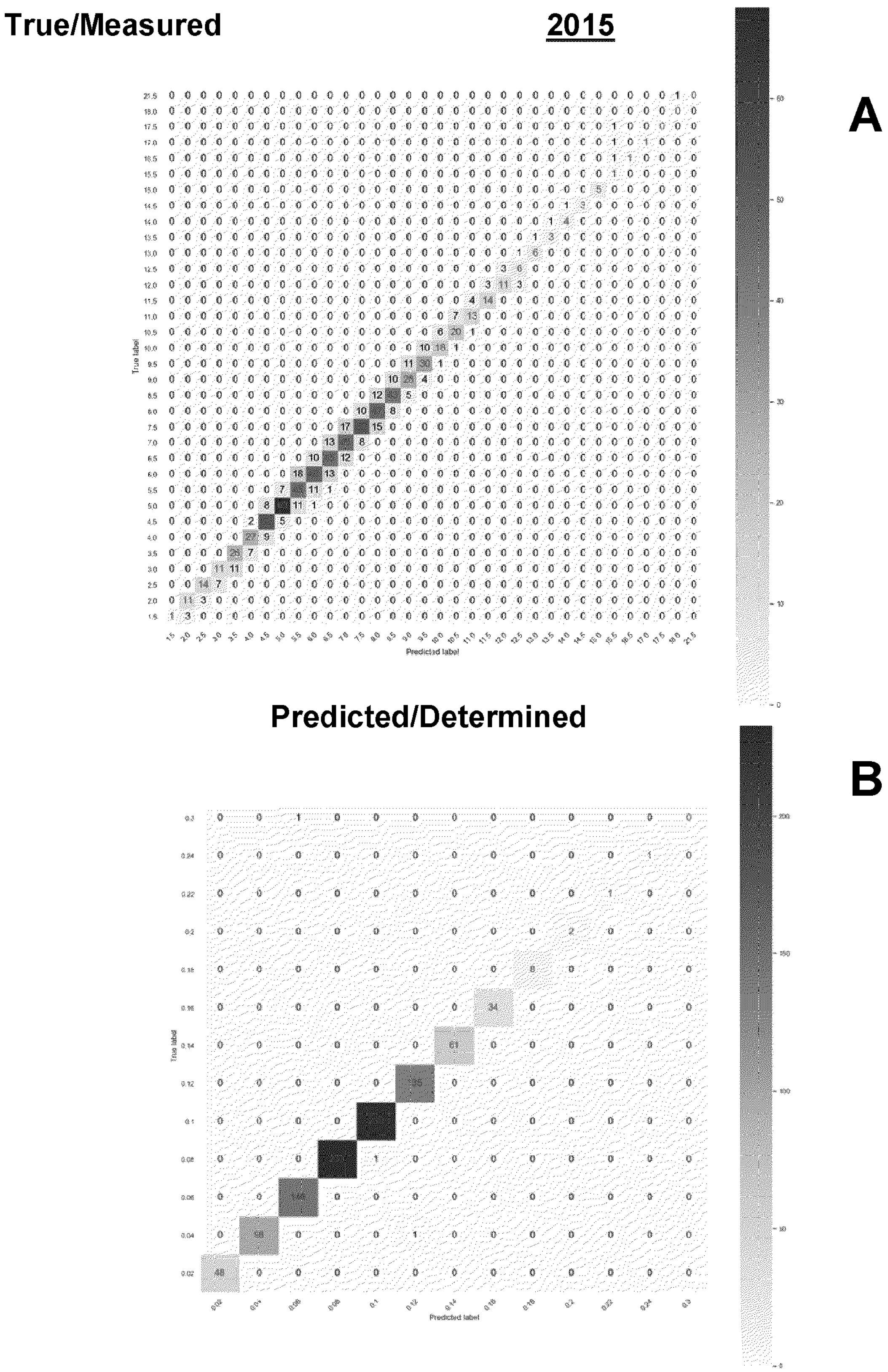
True/Measured
2015
A
True label
Predicted label
Predicted/Determined
B
True label
Predicted label

Fig. 5

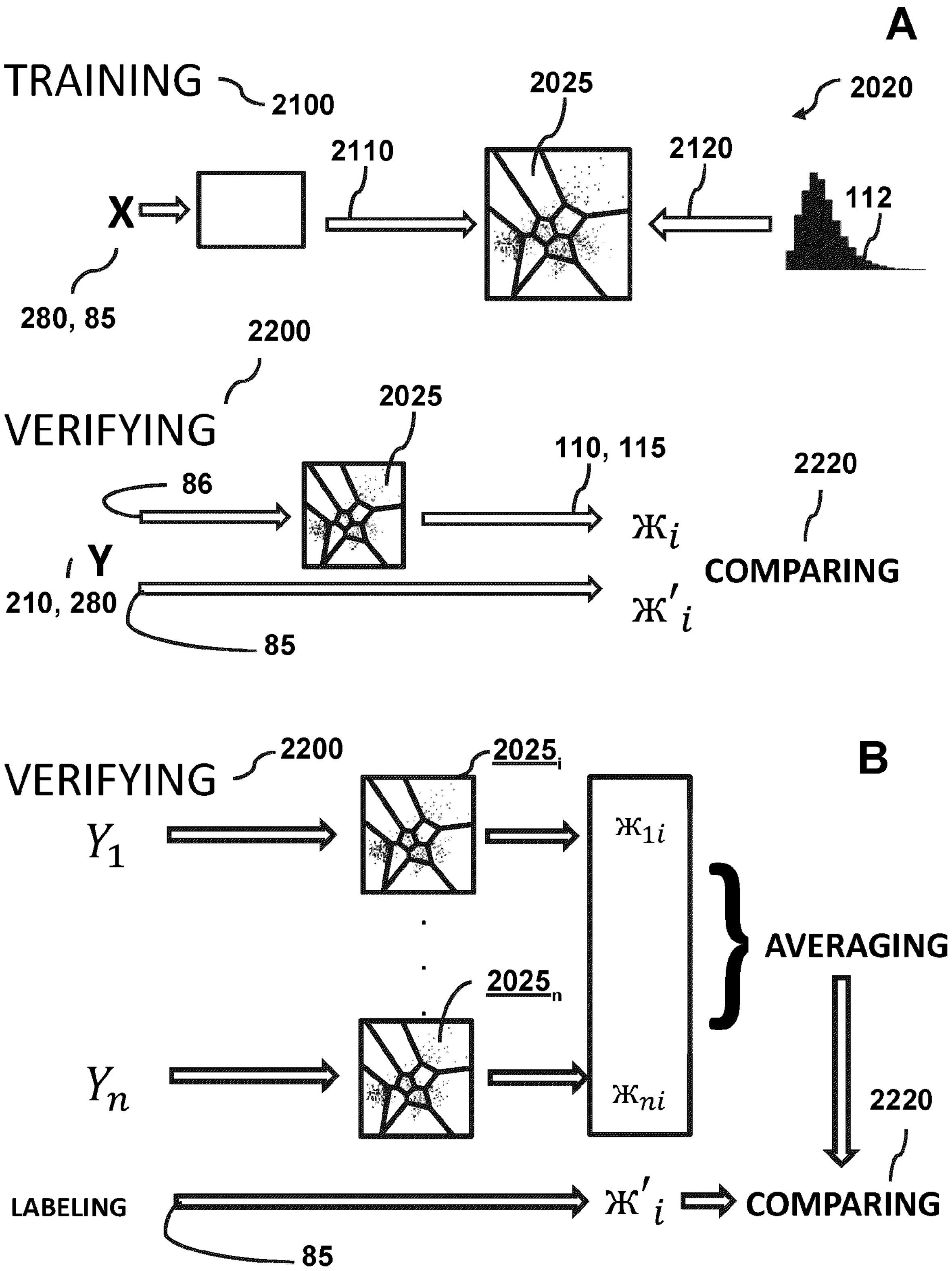
A
TRAINING
2100
2025
2020
2110
2120
X
112
280, 85
2200
VERIFYING
2025
110, 115
2220
86
Ж$_i$
Y
COMPARING
210, 280
Ж'$_i$
85
B
VERIFYING
2200
2025$_i$
$Y_1$
Ж$_{1i}$
AVERAGING
2025$_n$
$Y_n$
Ж$_{ni}$
2220
LABELING
Ж'$_i$
COMPARING
85

Fig. 6

2025

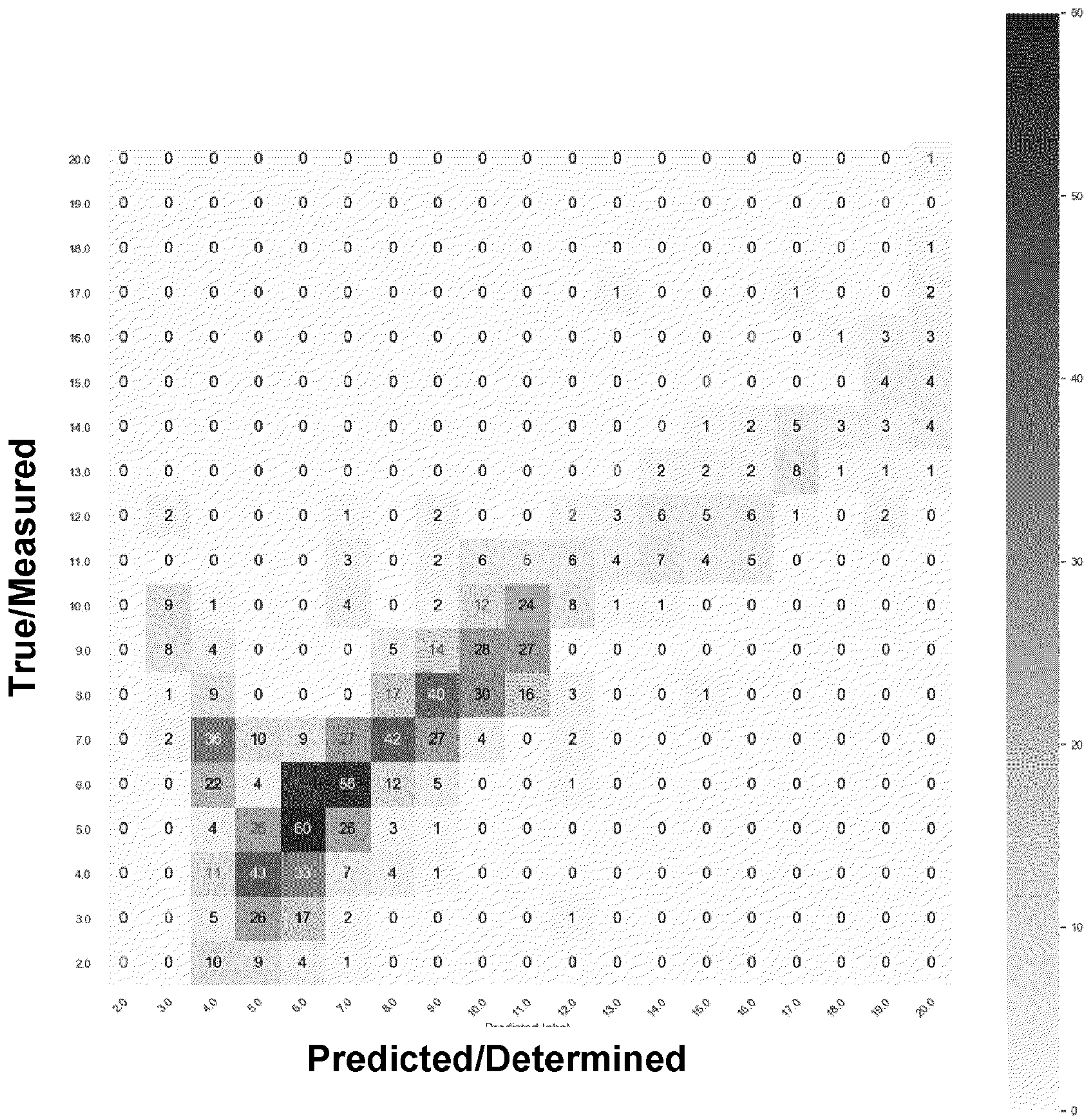


Fig. 7

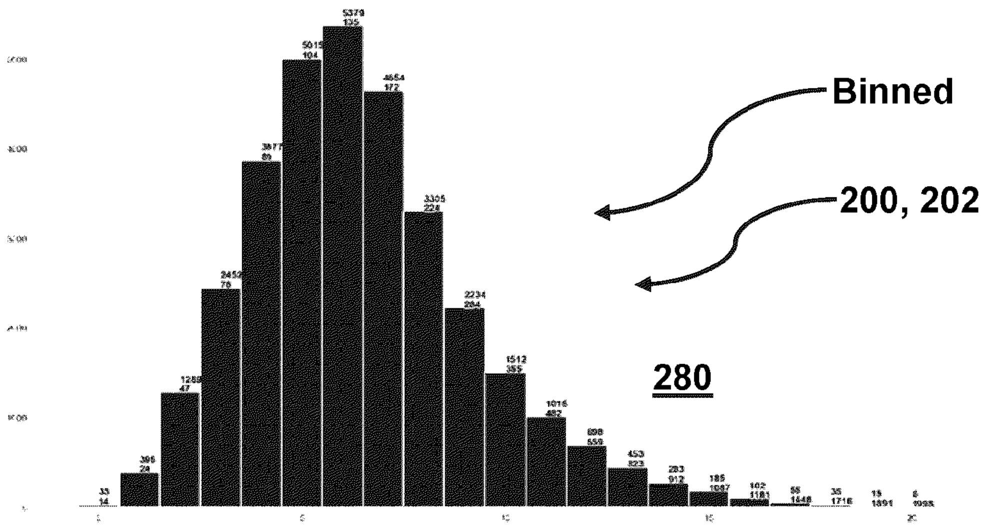


B

200, 210 ,280

```
key : abs_sum_of_changes
value : hws
14.132877749164086    2.0
16.39235667027355     2.5
22.987491665966775    3.0
36.168163013975416    3.5
46.263242705941764    4.0
60.563257170956064    4.5
87.23338541607865     5.0
129.8905751333793     5.5
159.1040589941172     6.0
187.46657413474588    6.5
213.47171558666705    7.0
236.63098766676077    7.5
254.32301552715597    8.0
272.4129260761176     8.5
314.46292064822677    9.0
340.20836252287296    9.5
352.1626028735891     10.0
367.5327219881179     10.5
383.28369174841583    11.0
398.8923313942968     11.5
411.73367396650764    12.0
417.61693312378003    12.5
425.24561655406677    13.0
```

110
1320
115
1300
112, 115
202, 212

Fig. 8

1000
1302
202

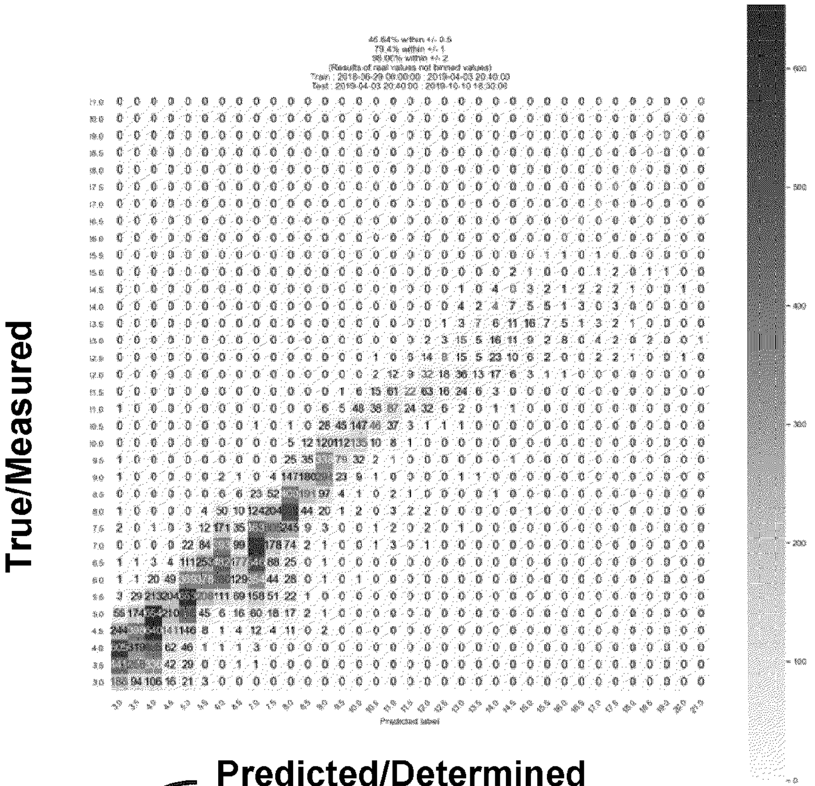


A

115 Predicted/Determined

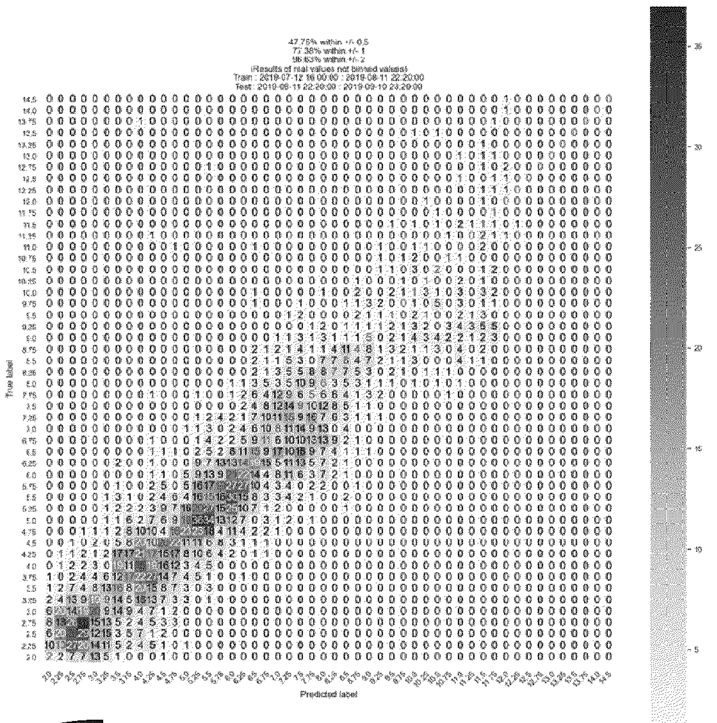

B

115 Predicted/Determined

Fig. 9

Europäisches Patentamt
European Patent Office
Office européen des brevets

# EUROPEAN SEARCH REPORT

Application Number
EP 20 19 8710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/086362 A1 (FU XU [CN] ET AL) 26 March 2015 (2015-03-26)<br>* paragraph [0005] *<br>* paragraph [0014] *<br>* paragraph [0019] - paragraph [0021]; figure 2 *<br>* paragraph [0029]; claim 30; figures 3-5 *<br>----- | 1-15 | INV.<br>F03D7/04<br>F03D17/00 |
| A | US 2011/137586 A1 (JIANG YONG [CA] ET AL) 9 June 2011 (2011-06-09)<br>* paragraph [0009] - paragraph [0010] *<br>* paragraph [0029] - paragraph [0033] *<br>----- | 1-15 | |
| A | EP 3 702 613 A1 (GEN ELECTRIC [US]) 2 September 2020 (2020-09-02)<br>* paragraph [0029] - paragraph [0038]; figure 4 *<br>----- | 1-15 | |
| A | US 2018/223814 A1 (BADRINATH KRISHNA VARUN [US] ET AL) 9 August 2018 (2018-08-09)<br>* paragraph [0036] - paragraph [0040]; figure 7 *<br>----- | 1-15 | TECHNICAL FIELDS SEARCHED (IPC)<br>F03D |
| A | US 2020/063710 A1 (FARROKHABADI MOSTAFA [CA] ET AL) 27 February 2020 (2020-02-27)<br>* paragraph [0033] - paragraph [0037] *<br>* paragraph [0044]; figure 2 *<br>* paragraph [0062] *<br>----- | 1-15 | |

The present search report has been drawn up for all claims

2

| Place of search | Date of completion of the search | Examiner |
|---|---|---|
| The Hague | 8 April 2021 | Tack, Gaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 19 8710

This annex lists the patent family members relating to the patent documents cited in the above-mentioned European search report. The members are as contained in the European Patent Office EDP file on The European Patent Office is in no way liable for these particulars which are merely given for the purpose of information.

08-04-2021

| Patent document cited in search report | Publication date | Patent family member(s) | Publication date |
|---|---|---|---|
| US 2015086362 A1 | 26-03-2015 | CN 104454350 A | 25-03-2015 |
| | | DE 102014113775 A1 | 26-03-2015 |
| | | DK 201470587 A1 | 07-04-2015 |
| | | US 2015086362 A1 | 26-03-2015 |
| US 2011137586 A1 | 09-06-2011 | US 2011137586 A1 | 09-06-2011 |
| | | WO 2011005385 A2 | 13-01-2011 |
| EP 3702613 A1 | 02-09-2020 | CN 111622898 A | 04-09-2020 |
| | | EP 3702613 A1 | 02-09-2020 |
| | | US 2020277932 A1 | 03-09-2020 |
| US 2018223814 A1 | 09-08-2018 | US 2018223812 A1 | 09-08-2018 |
| | | US 2018223814 A1 | 09-08-2018 |
| US 2020063710 A1 | 27-02-2020 | NONE | |

EPO FORM P0459

For more details about this annex : see Official Journal of the European Patent Office, No. 12/82